# EUROPEAN PATENT SPECIFICATION

(11) **EP 4 214 298 B1**
(45) Date of publication and mention of the grant of the patent: **28.01.2026**
(21) Application number: 21787012.0
(22) Date of filing: 20.09.2021
(51) Int. Cl.: C10L 5/10

(54) **BRIQUETTE**
BRIKETT
BRIQUETTE

(30) Priority: 21.09.2020 GB 202014846
(43) Date of publication of application: 26.07.2023
(73) Proprietor: Binding Solutions Ltd, Middlesbrough TS6 6US (GB)
(72) Inventor: JOYCE, Richard, Middlesbrough TS6 6US (GB)
(74) Representative: Thurston, Joanna
(86) International application number: PCT/GB2021/052427
(87) International publication number: WO 2022/058747

(56) References cited:
- EP-A1- 3 577 070
- DE-T2- 60 129 558
- US-A- 2 865 731
- US-A1- 2007 251 143
- DATABASE WPI Week 200276, Derwent World Patents Index; AN 2002-701231, XP002804822
- EISELE T C ET AL: "A REVIEW OF BINDERS IN IRON ORE PELLETIZATION", MINERAL PROCESSING AND EXTRACTIVE METALLURGY REVIEW, GORDON AND BREACH, NEW YORK, NY, US, vol. 24, 1 January 2003 (2003-01-01), pages 1 - 90, XP009033605, ISSN: 0882-7508, DOI: 10.1080/08827500306896

## Description

The invention relates to the use of fibres in briquettes, and to the production of briquettes, for instance from coal, metal or metal ores. Typically, the briquettes are formed from particulate material and a fibre.

There exists, worldwide, a huge quantity of powdered minerals. These often arise as waste from industries such as mining, manufacturing and power generation; and if reprocessed, represent a huge potential resource for energy or metal manufacturing. However, such powders are difficult to process into a stable form that can be transported not only to the site of use, but within the large processing plants at their destination. This problem is exacerbated where the particulate has been produced by a wet process, or where it has been stored under wet conditions, such that it has a high moisture content.

The addition of fibres to strengthen industrial systems is known, for instance the addition of polypropylene fibres to concrete has been known for years to strengthen the concrete substrate whilst reducing shrinkage and cracking. WO 2018/141318 A1 discloses cold-formed briquettes that contain coke or coat as particulate material, a binder and cellulose fibres.

It would be advantageous to provide for a pelletisation/briquetting process in which the briquettes have improved stability, in particular where the particulate substrate is wet. This may provide for, for instance, the production of metallic ore briquettes from concentrated fines of high moisture content, the processing of these using extrusion techniques, and for the agglomeration of metallic fines with liquid binders, where the density of the fines restricts the amount of liquid that can be added.

The invention is intended to overcome or ameliorate at least some aspects of these problems.

Accordingly, in a first aspect of the invention there is provided a cold-formed briquette comprising a particulate material; and a fibre, often in the range 0.1 - 0.4 wt% of the briquette fibre; and in the range 0.2 - 0.8 wt% binder, wherein the binder is selected from at least partially saponified polyvinyl alcohol, a combination of polyvinyl alcohol and sodium hydroxide, an alkali metal alkyl siliconate or polyalkyl silicic acid, phenol formaldehyde resin, guar gum, a combination of guar gum and calcium oxide, anionic polyacrylamide, styrene acrylate emulsion, and combinations thereof. It has been found that the addition of the fibre to the particulate material modifies the rheology of the briquette and stabilises the moisture content. This allows the particulate to be processed into a briquette of acceptable strength (green and cured), such that it can be transported and stored without undue degradation even where the particulate material has not been dried. The ability to omit the drying step saves significant time, energy costs and removes the risk of chemically altering the particulate during the drying process. Further, it has been found that the presence of the fibres adds void spaces to the pellets, increasing the surface area of the particulate material in contact with the air. This can be beneficial where the pellets contain material that will undergo chemical reaction as the voids provide for improved access of the reagent to the material. One example of this could be, where iron ore is to be reduced in a blast furnace. Another example could be the coating of the binder surface with wetting agent, which can occur more effectively where there is a large pore volume in the briquette. A further advantage, where the particulate material is a metal ore, is that the fibres modify the rheology of the material improving the resistance of the particulate to shear and aiding briquetting by roller briquetting techniques.

As used herein the term "fibre" is intended to refer to a thread or filament of any composition. It will typically be the case that the fibres are of length in the range 15 µm - 5 mm or range 15 µm - 3 mm (often 50 µm - 2 mm, or 0.1 mm - 1 mm) and diameter in the range 10 - 100 µm (often 15 - 50 µm). Optionally, the fibre length is in the range of from about 0.2 mm to about 5 mm, often in the range of about 0.3 mm to 4 mm. The ratio of fibre diameter:length is such that a fibre is longer than it is wide. It has been found that generally the longer the fibre the greater the stabilisation effect of the fibre as the adhesion of the fibre to the particulate material increases with length altering the rheology by thickening.

In practice, fibres are usually supplied with a "D90" value, which means that 90% of the fibres have a length within this range. The fibres for the invention usually have a D90 value of at least 0.2 mm, preferably from of 0.2 mm to 5 mm.

The fibre may be natural or man-made, virgin or recycled, and may be selected from synthetic polymers, natural polymers and combinations thereof. The synthetic polymers may be selected from polypropylene, polyethylene, polyester, polyacrylonitrile, polyamides or mixtures thereof. For instance, a mixture may be formed if the synthetic polymers are sourced from recycled textiles. The natural polymers may include vegetable (including wood) and animal fibres, often the natural polymer will be water absorbent, but this is not essential. For instance, wool may be used, as may cellulosic fibres such as cotton, jute, flax, hemp and sisal. Further, wood fibres may be used, either directly from wood pulp or from the paper industry. As used herein the term "paper" is intended to be an umbrella term for both paper and card. The cellulosic fibres may be composites with synthetic or other natural polymers. Often the fibres will be cellulosic fibres, often recycled for environmental reasons. As used herein reference to "fibre", as opposed to a composite, will refer to a fibre comprising in the range 80 - 100 wt% of the primary fibre component (e.g. cellulose), often 90 - 100 wt%.

The fibre will be present in the range 0.1 - 0.4 wt% of the briquette, often in the range 0.2 - 0.3 wt%. At these levels the fibres modify the rheology of the briquette material, allowing for processing and strengthening, without introducing unduly high levels of porosity such that strength begins to reduce relative to the particulate without the fibre present.

The fibres may be in fibrous, granular or powder form, often in granular form. The granules may be of particle size distribution such that 60 - 90% of the granules will pass through a 5.6 mm sieve (US mesh 3.5), often such that 60 - 90% of the granules will pass through a 4.75 mm sieve (US mesh 4), or that 60 - 90% pass through a 4.5 mm sieve.

The bulk density of the fibres may be in the range 10 - 1500 g/l, often in the range 20 - 500 g/l or in the range 200 - 300 g/l. At these densities the fibres can be added to the particulate material without significant loss in briquette density and without the potential resultant loss in briquette strength.

It will typically be the case that the fibres are insoluble in water, and often of low moisture content. The use of insoluble fibres prevents dissolution of the fibre under briquette storage conditions, ensuring that strength is not lost. Keeping the moisture content low ensures that the addition of the fibres to the particulate material, which is often wet such that processing the particulate is difficult in the absence of the fibres, does not further add to the moisture content of the briquette mixture, potentially exacerbating the issues around the processing of wet particulates described above.

It may be that the cellulosic fibre includes CFF Topcel^{™}. CFF Topcel is a granular recycled paper product comprising greater than 80 wt% cellulose, of bulk density in the range 200 - 280 g/l, moisture content ≤7 wt%, and of granule size distribution such that 60 - 90% of the granules will pass through a 4.5mm sieve. Cellulosic fibres may also be provided by CreaFill^{™} USA

The particulate material may be selected from a metal ore, metal ore containing waste, iron residue, iron filings, mineral waste, a carbonaceous material, arc furnace waste or combinations thereof.

Often the metal ore comprises iron ore. The iron ore may be any naturally or non-naturally occurring ore, such as haematite, magnetite, or wustite and may contain naturally occurring contaminants.

Where the particulate material is a carbonaceous material, this may be coke, graphite, carbon black, peat or coal. Often the particulate material will comprise coke and/or coal. As used herein, the term "coal" is intended to include lignites, sub-bituminous coal, bituminous coal, steam coal and anthracite. Cokes have been found to be particularly problematic at forming briquettes and so the invention offers a particular benefit in the provision of stronger coke briquettes.

Mineral wastes include mill scale, mill sludges, and fines from ores or metal containing wastes.

The metal may be, or the metal ore mineral waste may contain; iron, zinc, nickel, copper, chromium, manganese, gold, platinum, silver, titanium, tin, lead, vanadium, cadmium, beryllium, molybdenum, uranium or mixtures thereof or elemental metal or in the form of, for example, oxides or silicates.

The particulate iron residues are typically from tailing ponds or wash systems and typically are superfine. That is they have at least 90% particles below 200 µm and typically at least 50% below 20 µm. The iron residues are typically iron oxides. Recovered iron and ferroalloy by-products that are in the form of highly rounded and of a narrow particle distribution may prove difficult to agglomerate. This is due to several factors, such as a low level of mechanical interlocking, polished substrates, high density and low surface area. However, when used in a briquette as disclosed herein, recovered iron and ferroalloy by-products are more easily agglomerated.

The particulate material may advantageously be MDF sawdust. MDF sawdust is a product made from hardwood and softwood fibres that have been bonded together using a ureaformaldehyde adhesive. One advantage of this is that the binders in the MDF contribute to the briquette binding. Formaldehyde is a potential carcinogen, and can be absorbed by the dust particles, which can be toxic if said particles are inhaled or if said particles come into contact with a person's skin. For this reason, MDF sawdust has been deemed hazardous waste, and is difficult to dispose of. Therefore, incorporation of this product into a briquette product is a good way of disposing of this waste, and is therefore environmentally advantageous.

It should be noted that the term "briquette" includes objects commonly referred to as pellets, rods, pencils, briquettes and slugs. These objects share the common features of being a compacted form of material and are differentiated principally by their size and shape. The briquette is cold formed. As used herein the term "cold formed" is intended to mean formed without the application of heat, for example without sintering, or heating to above 60°C or above 40°C or 30°C prior to being put in the furnace. Traditionally, briquettes were formed using heat processes producing so called, hot bonded (indurated) briquettes. Hot formed/bonded briquettes develop their strength by heat treatment, which creates bonds of a ceramic nature, with associated porosity. The porosity provides voids to allow for some expansion and internal stress relief. This is particularly important where the briquette is a metal ore briquette, as reduction of the metal (for instance the hematite to magnetite conversion in iron ore) causes volume changes and stresses on the briquette. As this void formation does not occur during cold pellet formation, alternative methods are needed to prevent disintegration of the pellet when placed under internal stress. A solution is the inclusion of fibres, as described herein. Without being bound by theory it is believed that the presence of the fibres provides space for crystal growth which will otherwise cause micro cracks in the briquette reducing the briquette strength and leading to disintegration.

The amount of compaction of the pellet may be varied, for example, by placing the mixture of the particulate iron ore and binder formulation under greater or lesser amounts of vacuum depending upon the amount of compaction required. A greater amount of vacuum will increase the compaction of the pellet. Alternatively, this may be controlled by the amount of pressure used to form the pellet.

Briquettes typically have a maximum average diameter of 20mm, more typically 16mm or 15mm, a minimum average diameter of 2mm, especially 5mm or an average diameter of 10-12mm. These objects share the common feature of being a compacted form of material and are differentiated principally by their size and shape.

The particulate material may be a powder, or filings. Often the particulate material has a particle diameter of 4mm or less (broadest axis). Often the particle diameter will be in the range 0.1mm to 4mm. Often, at least 10 wt% of the particulate material is capable of passing through a 100 µm sieve prior to forming into a briquette. The formation of briquettes is most useful with materials of these particle diameters, as such fine particles are difficult and hazardous to transport. Further, the presence of the smaller particles of the particulate material improves the packing of the material.

The briquette additionally comprises binders. For instance, the binder may comprise cement. As used herein the term cement is intended to refer to inorganic cements.

The binder is selected from at least partially saponified polyvinyl alcohol, a combination of polyvinyl alcohol and sodium hydroxide, an alkali metal alkyl siliconate or polyalkyl silicic acid, phenol formaldehyde resin, guar gum (often 5000 cps grade), a combination of guar gum and calcium oxide, anionic polyacrylamide, styrene acrylate emulsion, and combinations thereof. A binder from this list may be present independently or in addition to cement. These binders will be selected in line with the function of the briquette, based on the conditions that the briquette will be subjected to and the nature of the particulate matter.

Where the binder is polyvinyl alcohol, this is typically polyvinyl alcohol formed from polyvinyl acetate by replacing the acetic acid radical of acetate with a hydroxyl radical by reacting the polyvinyl acetate with sodium hydroxide in a process called saponification. "Partially saponified" means that some of the acetate groups have been replaced by hydroxyl groups thereby forming at least a partially saponified polyvinyl alcohol containing vinyl alcohol residues. Typically, the polyvinyl alcohol has a degree of saponification of at least 80%, typically at least 85%, at least 90%, at least 95%, 98%, 99% or 100% saponification. Polyvinyl alcohol may be obtained commercially from, for example, Kuraray Europe GmbH of Frankfurt Am Main, Germany. Typically, the polyvinyl alcohol is utilised as a solution in water. The polyvinyl alcohol may be modified to include a sodium hydroxide content. Typically, the polyvinyl alcohol binder has an active polymer content of 12-13% and a pH in the range 4-6 when in solution.

Where the binder is an alkali metal alkyl siliconate, this may be an alkali metal C₁ to C₄ alkyl siliconate, such as an alkali metal methyl siliconate. Alternatively, the methyl group moiety may be replaced by an ethyl, propyl or butyl moiety. Typically, the alkali metal is a sodium or potassium, most typically potassium. Most typically potassium methyl siliconate is used, for example, sold under the trade name Silres by Wacker Chemie GmbH. This has been found to create briquettes with better drop resistance. Moreover, it produces surprisingly heat stable briquettes with briquettes capable of substantially maintaining their shape in a reducing atmosphere of up to 1200°C. Alkali metal alkyl siliconates typically react with carbon dioxide during a curing process to produce the equivalent polyalkylsilicic acid, such as a poly C₁ to C₄ alkyl silicic acid, for instance poly methyl silicic acid. They are conventionally used as masonry waterproofing agents, however, it has been found that the strength of the briquette can be improved through the addition of siliconate or polyalkyl silicic acid.

Phenol formaldehyde resins are generally known in the art. Typically, the resin is a resole or novolac resin made with formaldehyde to phenol ratios of greater than 1, typically around 1.5. The resin may be mixed into the particulate matter as powder or as an aqueous solution.

Guar gum may be added with acrylamide at 4 - 12, most typically 5 - 10 or 8 parts polyacrylamide to 1 part guar gum by weight. Typically, 3 parts calcium oxide may be added.

Some very finely powdered material wastes or mineral fines, such as arc furnace mineral wastes, have been found to have problems being mixed with binding agents such as polyvinyl alcohol. The inventors have found that the production of briquettes from such wastes can be advantageously improved using a polysaccharide binder such as starch, especially a pregelatinised potato starch, to replace or be used in combination with polyvinyl alcohol.

The briquette will comprise 0.2 - 0.8 wt% binder. However, where the binder comprises cement, there will often be in the range 5 - 10 wt% binder.

Where the binder comprises polyvinyl alcohol, the briquette may contain 0.01 - 0.8 wt% of binder. More typically, it contains 0.5 wt% or 0.4 wt% or 0.3 wt% polyvinyl alcohol binder. Where the binder comprises alkali metal alkyl siliconate or polyalkylsilicic acid, this is often used in the range 0.01 - 0.5 wt%, more typically 0.5 wt% or 0.2 wt% of the material. Where the binder comprises phenol formaldehyde resin, briquette will often comprise 0.5 - 1.5 wt% of this resin. The use of phenol formaldehyde resin in general, and of these amounts of phenol formaldehyde resin in particular, has been found to provide particular strength benefits where the particulate material is iron ore. Often, where the binder is anionic polyacrylamide, this will be present in the range 0.5 - 1.0 wt%. Where the binder comprises styrene acrylate emulsion this will typically be present in 0.5 - 1.5 wt%, more often typically round 1 wt%. Often the styrene acrylate emulsion will be present in combination with cement. Where this is the case, typically the cements will be present in the range 5 - 10 wt %, typically 8% inorganic cement.

The polysaccharide binder may be starch, it may be pregelatinised potato starch. It may be provided as up to 0.8 wt% of the briquette, especially 0.6 wt%, for example, by mixing 10 wt% solution of the binder with the particulate material. Up to 0.5 wt% of polyvinyl alcohol, as defined above, may be added, in particulate where the particulate material is arc furnace waste.

Where the particulate material comprises metal ore or metal ore containing waste, the binder will often comprise phenol formaldehyde resin with optional polyvinyl alcohol and optional guar gum. The polyvinyl alcohol will often be present in the range 0.1 - 0.2 wt%, often around 0.125 wt%, the guar gum may be present in the range 0.5 - 1.05 wt%, often at around 0.5 wt%.

The binder may further comprise a carbon additive to promote reduction reactions, for instance where the particulate material is a metal ore. The carbon additive will typically comprise in the range 80 - 100 wt% carbon, often 90 - 99 wt% carbon and will generally be selected from a carbon-containing material which is of low volatility and which does not undergo volume change (for instance by swelling) in the briquette. Often the carbon additive will be selected from anthracite, semi-coke, coke, or combinations thereof. Where present, the carbon additive will generally be in the range 1 - 25 wt%, often in the range 5 to 20 wt%.

The strength and resilience of the briquette can be further improved by addition of a suitable cross-linking agent. Suitable cross-linking agents include, for example, glutaraldehydes, for example at 0.01 - 5 wt%. Sodium hydroxide, for example 0.1 wt%, may also be used as a cross-linking agent. Other cross-linkers include glyoxal, glyoxal resin, PAAE resin (polyamidoamine epichlorohydrine), melamine formaldehydes, organic titanates (eg Tizor^{™}, Du Pont), boric acid, ammonium, zirconium carbonate and glutaric dialdehyde-bis-sodium bisulphate. Typically, up to 5% and more typically 3% or 2 wt% of the cross-linking agent is used. This allows, for example, the amount of binder (such as polyvinyl alcohol) to be reduced from, for example, 0.8 wt% or 0.5 wt% to, for example, 0.3 wt% or 0.4 wt% binder. This is a cost-effective way of improving the strength of the material. Therefore, often, the cross-linking agent will be present with a polyvinyl alcohol binder, often this will include a partially saponified component, such that the combination may be: 0.01 - 0.5 wt% fully saponified polyvinyl alcohol, 0.01 - 0.5 wt% partially saponified PVA and 0.01 - 5 wt% of crosslinking agent. Typically a 1:1 ratio by weight of fully saponified : partially saponified polyvinyl alcohol is used. Typically, 0.01 - 0.04 wt%, especially 0.02 wt% of glutaraldehyde is used as the crosslinking agent when used with polyvinyl alcohols. This combination of polyvinyl alcohol binder and cross-linking agent has been found to be particularly useful in stabilising particulate mineral waste.

As such, it has been determined that the choice of cross-linking agent can improve the properties of briquettes. Another example of this is where the binder comprises 0.01 - 5% polyvinyl alcohol and 0.01 - 0.5 wt%, especially 0.02 wt% sodium hydroxide. Sodium hydroxide has been found to produce improved properties compared to, for example, glutaraldehyde, especially with metal ores and wastes, such as haematite. They may be used or made as defined above.

Coke and coal dusts have been advantageously combined using phenol formaldehyde and a hardener. The briquette may therefore further comprise a hardener. The phenol formaldehyde may be used in amounts up to 4 wt%, or up to 2 wt%. Phenol formaldehyde may be typically used by fixing as an aqueous solution or with the hardener. The hardener may be, for example, glycol triacetate and a gum such as guar gum, acacia gum, and gum arabic. Typically, 0.1 - 0.5 wt% glycol triacetate and 0.1 - 0.5 wt% gum are used. This may be cold cured.

However, the briquette may additionally comprise a waterproofing agent to further improve the water resistance, where the binder is an alkali metal alkyl siliconate, this may also function as a waterproofing agent. Where present, the waterproofing agent may be combined with the particulate material or as a layer on the external surface of the briquette.

The waterproofing agent is typically sprayed onto the outer surface of the briquette after the briquette has been formed. Typically, waterproofing agents include styrene-acrylate copolymers such as Vinnapas^{™} SAF 34 (Wacker Chemie AG, Munich, Germany) which is typically a fine particle dispersion of a styrene acrylate copolymer, typically free from alkyl phenol ethoxylate, optionally this may contain 0.05 - 1% guar gum. Alternatively, the briquettes may be coated by spraying with a layer of bituminous emulsion. An alternative to spraying of the briquettes with the materials includes, for example, dipping the briquettes in a solution or dispersion of the waterproofing material, or combining the waterproofing material with the particulate material and the binder.

Typically, the briquette comprises <15%, <10% or <5wt% of water. If necessary, the water content may be reduced by drying, for example, by adding burnt lime (calcium oxide) at up to typically 3%. However, it is an aim of the invention to remove the need to dry the particulate matter in most circumstances.

A processing aid may be present. This may comprise an additive selected from a polysaccharide, a cellulosic thickening agent and combinations thereof. Often, the polysaccharide and/or a cellulosic thickening agent is selected from guar gum, gum arabic, xanthan gum, starch, hydroxyethyl cellulose, methyl cellulose, methyl hydroxyethyl cellulose and combinations thereof. These processing aids have been found to both thicken and stabilise the pellets, reducing chemical degradation and improving shelf life. Further, the selection of non-cement based processing aids removes the common problem of increasing slag produced during iron processing, and it is a feature of the invention that there is no need to add cement or clay based processing aids. Guar gum and methyl hydroxyethyl cellulose are often used as these processing aids have been found not only to aid processing of the iron ore into pellets, but also to further improve green strength relative to pellets which contain silicate only. Guar gum may be used where the environmental credentials of the iron ore pellets are of concern, as this is a natural product. The processing aid may be present in the formulation in the range 5 - 25 wt% or 10 - 20 wt% of the formulation, it has been found that with extrusion processing these levels of processing aid prevent stalling of the extruder through clogging or other ingress of particulate matter into the mechanics of the extrusion machinery.

A setting agent may also be present, this may promote polymerisation of the silicate leading to gelling and enhanced agglomeration. The setting agent may be selected from glycerol triacetate, glycidoxypropyltrimethoxysilane, fumed silica, potassium methylsiliconate and combinations thereof. Often the setting agent will comprise glycidoxypropyltrimethoxysilane as this offers excellent adhesion. The setting agent may be present in the range 0.5 - 1.0 wt% of the binder formulation.

In a second aspect of the invention there is provided a method for producing a cold-formed briquette according to the first aspect of the invention comprising: mixing the particulate material, with in the range 0.1 - 0.4 wt% fibre and in the range 0.2 - 0.8 wt% binder selected from at least partially saponified polyvinyl alcohol, a combination of polyvinyl alcohol and sodium hydroxide, an alkali metal alkyl siliconate or polyalkyl silicic acid, phenol formaldehyde resin, guar gum, a combination of guar gum and calcium oxide, anionic polyacrylamide, styrene acrylate emulsion, and combinations thereof; compressing the mixture to form a briquette; and curing the briquette. The method may comprise the additional steps of mixing one or more of a binder, a cross-linking material, and/or a waterproofing agent with the particulate material.

Typically, mixing is effected using twin-shaft batching mixers, this is as continuous mixers do not typically control the material quantities accurately enough.

Compression may be through the use of a mould, roller pressing or extrusion. Often, a roller press will be used to compress the mixture to form the briquette. A vacuum may be used to improve uptake of the binder where this is present, however this is not generally needed.

The briquette may then be allowed to cure, for example, for 12, 24 or 48 hours. Typically, the process is carried out at ambient temperatures, for example, 0 - 40°C, 15 - 30°C, 20 - 25°C or 20°C.

Unless otherwise stated, each of the integers described may be used in combination with any other integer as would be understood by the person skilled in the art. Further, although all aspects of the invention preferably "comprise" the features described in relation to that aspect, it is specifically envisaged that they may "consist" or "consist essentially" of those features outlined in the claims. In addition, all terms, unless specifically defined herein, are intended to be given their commonly understood meaning in the art.

Further, in the discussion of the invention, unless stated to the contrary, the disclosure of alternative values for the upper or lower limit of the permitted range of a parameter, is to be construed as an implied statement that each intermediate value of said parameter, lying between the smaller and greater of the alternatives, is itself also disclosed as a possible value for the parameter.

In addition, unless otherwise stated, all numerical values appearing in this application are to be understood as being modified by the term "about". The term "wt%" and analogous terms is intended to mean the percentage by weight of the total briquette composition.

In order that the invention may be more readily understood, it will be described further with reference to the specific examples hereinafter.

### Example 1: Magnetite

A magnetite sample consisting of 65 wt% Fe₃O₄ and 2 - 30 wt% FeO (particle size of <90 µm) was provided. This was formed into Briquettes using a HUTT-Greaves roller press (pressure of 200Bar). The fibres used were CFF Topcel fibres (cellulose fibres). The moisture content and fibre level was varied as shown in Table 1 below.

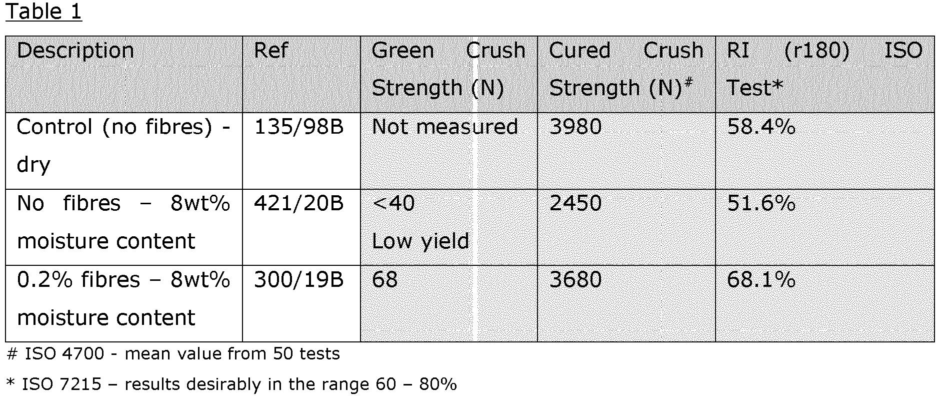

As can be seen, in the absence of fibres, a dry sample provides a cured strength of just under 4000N, which is sufficient to allow transport and storage without damage or disintegration, and processing through a blast furnace. However, the RI (reduction index), a measure of the rate of reduction by function of oxygen loss, fell below the 60% threshold level for reduction rates. Not meeting this standard has a negative effect on the marketability of the product.

When the moisture content is increased to 8 wt%, mimicking the effects of, for instance, storage of the mineral in a damp environment, it was difficult to process the briquette in the absence of fibres. The briquettes formed had poor integrity and the levels of wastage were high (resulting in low yields). This is shown by the low cured crush strength and low RI results.

However, when 0.2 wt% fibres was added to the mineral in the presence of the same level of moisture (8 wt%) very good briquettes were formed. These had a good green crush strength, allowing for processing without fear of disintegration, a cured crush strength comparable to the dry mineral and an excellent RI value. Thus, this test shows the benefit of the presence of the fibres in terms of:
- Stabilised rheology of the mix to give good compaction parameters
- Reinforcement of the structure to increase strength
- Enable processing of materials at raised moisture contents

Further, a study of the briquette structure showed an increase in the voidage/porosity of the briquette, increasing the total surface area across which reduction (e.g. during processing to extract metal) can occur. This results in improved processing times of the briquettes.

### Example 2: Iron Ore Pellet Fines

Briquettes were formed from hematite Iron Ore fines (>65% Fe) containing 0.25 wt% cellulose fibres and an organic binder. Less degradation was observed during the hematite to magnetite reduction process (Fe₂O₃ → Fe₃O₄ at 500 - 760°C), than in the absence of fibres. As noted above, this is believed to be because the fibres allow space for the crystal growth which occurs during this conversion but which will otherwise cause micro cracks in the briquette reducing the briquette strength and leading to disintegration.

The test results provided in Table 2 below illustrate this principle.

| **Sample** | **RDI** Test Results |
|---|---|
| Without fibre | 53.2 - 3.15mm |
| With fibre | 18.3, 12.0 - 3.15mm |

| | |
|---|---|
| * Reduction Disintegration Index ISO 4696-2 | |

It can be clearly seen that in the fibre improves the RDI value of the briquette significantly (by 38%). It is generally desirable for RDI values for iron ore briquettes to be as low as possible (ideally less than 10).

### Example 3: High grade anthracite

It is typically the case that prior to briquette formation from high grade anthracite, the anthracite has to be washed in order to provide clean sized products. This results in a wet product (superfine tailings in water) which must be dewatered using a press. However, even after dewatering significant moisture remains (for instance in the range 20 - 50 wt%) which makes handling difficult even with extrusion processes.

It has been found that the addition of 0.2 - 0.4 wt% cellulose fibres (CFF Topcel) to the washed anthracite tailings facilitates the extrusion of the anthracite by controlling moisture content. The level of fibre added depends on the moisture content, with higher levels being required to process high moisture content samples. Further, resistance to flow is increased due to the higher shear force required to process the anthracite-fibre mixture.

### Example 4: Ferro-nickel

Ferro-nickel of particle size in the range 0.1 - 8mm was combined with 30 wt% polyvinyl alcohol and 0.3 wt% polyacrylonitrile fibres. The high density of the ferro-nickel restricts the amount of liquid binder that can be added, such that it is often difficult to form a satisfactory film for binding. Further, the mixture becomes saturated so cannot be compacted. The presence of the fibres enabled the briquetting process at moisture levels where typically the ferro-nickel would not bind.

It would be appreciated that the methods of the invention are capable of being implemented in a variety of ways, only a few of which have been illustrated and described above.

### Example 5: Iron Particulates

Briquettes were produced from a blend of secondary product streams with a high residual iron content. A Komarek DH450 roller press was used to form the briquettes at a pressure of 210 bar

To enable a satisfactory green and final strength, fibres were added to the proprietary binder formulation at a dose of 0.0 to 0.5%. The 0 percent fibre test is included as a comparative example.

Yield was calculated as % by weight of formed briquettes on first pass of the material through the press.

Strength was measured by testing individual briquettes to peak load on a Mecmesin Omni-test compressive strength tester, with a load rate of 10 mm/min. The average result was recorded from 6 briquettes per variable. Green strength was tested at <1 hour from production, and Cured strength at 48 hours after production.

### Results and Observations:

| Percentage Addition of fibers | Yield (% of acceptably formed briquettes) | Average Green strength | Average Cured strength |
|---|---|---|---|
| 0 | <5% | Not measurable | 1077N |
| 0.1 | 78% | 78N | 2624N |
| 0.2 | 89% | 101N | 4442N |
| 0.3 | 90% | 96N | 4312N |
| 0.4 | 83% | 95N | 4505N |

## Claims

1. A cold-formed briquette comprising:
(i) a particulate material;
(ii) in the range 0.1 - 0.4 wt% fibre; and
(iii) in the range 0.2 - 0.8 wt% binder, wherein the binder is selected from at least partially saponified polyvinyl alcohol, a combination of polyvinyl alcohol and sodium hydroxide, an alkali metal alkyl siliconate or polyalkyl silicic acid, phenol formaldehyde resin, guar gum, a combination of guar gum and calcium oxide, anionic polyacrylamide, styrene acrylate emulsion, and combinations thereof.

2. A briquette according to claim 1, wherein the fibre is a cellulose-containing fibre; optionally wherein the fibre is a textile or paper derived fibre.

3. A briquette according to claim 1 or claim 2, wherein the bulk density of the fibre is in the range 20 - 500 g/l and/or at least 90% of the fibre has a length of from 1 mm to 5 mm.

4. A briquette according to any preceding claim, wherein the fibres are of length in the range 0.2mm - 5mm.

5. A briquette according to any claim 4, wherein the fibres are of diameter in the range 10 - 100 µm.

6. A briquette according to any preceding claim, wherein the particulate material is selected from a metal ore, metal ore containing waste, iron residue, iron filings, mineral waste, a carbonaceous material, arc furnace waste, MDF sawdust or combinations thereof.

7. A briquette according to claim 6, wherein the metal ore comprises iron ore or wherein the carbonaceous material comprises coke and/or coal.

8. A briquette according to any preceding claim, wherein the particulate material has a particle diameter of 4 mm or less.

9. A briquette according to any preceding claim, wherein at least 10 wt% of the particulate material is capable of passing through a 100 µm sieve prior to forming into a briquette.

10. A briquette according to any preceding claim, additionally comprising in the range 0.01 to 5 wt% of a cross-linking agent selected from glutaraldehyde, sodium hydroxide, glyoxal, glyoxal resin, PAAE resin, melamine formaldehydes, organic titanates, boric acid, ammonium, zirconium carbonate and glutaric dialdehyde-bis-sodium bisulphate; optionally wherein the cross-linking agent comprises glutaraldehyde.

11. A briquette according to any preceding claim, additionally comprising a waterproofing agent comprising a styrene-acrylate copolymer or a bitumen emulsion, optionally combined with the particulate material or as a layer on the external surface of the briquette.

12. A briquette according to any preceding claim, further comprising a carbon additive selected from anthracite, semi-coke, coke, or combinations thereof.

13. A briquette according to any preceding claim, having a moisture content of <15 wt%.

14. A briquette according to any preceding claim, further comprising a hardener selected from phenol formaldehyde, glycol triacetate and a gum such as guar gum, acacia gum, and gum arabic.

15. A briquette according to any preceding claim, wherein the briquette is formed without sintering or heating to above 60°C.

16. A method for producing a cold-formed briquette according to any preceding claim comprising:
(i) mixing the particulate material, with in the range 0.1 - 0.4 wt% fibre and in the range 0.2 - 0.8 wt% binder selected from at least partially saponified polyvinyl alcohol, a combination of polyvinyl alcohol and sodium hydroxide, an alkali metal alkyl siliconate or polyalkyl silicic acid, phenol formaldehyde resin, guar gum, a combination of guar gum and calcium oxide, anionic polyacrylamide, styrene acrylate emulsion, and combinations thereof;
(ii) compressing the mixture to form a briquette; and
(iii) curing the briquette.

17. A method according to claim 16, wherein the briquette is formed without sintering or heating to above 60°C.

18. A method according to claim 16 or claim 17, further comprising the step of mixing one or more of:
a cross-linking material selected from glutaraldehyde, sodium hydroxide, glyoxal, glyoxal resin, PAAE resin, melamine formaldehydes, organic titanates, boric acid, ammonium, zirconium carbonate and glutaric dialdehyde-bis-sodium bisulphate; and/or
a waterproofing agent comprising a styrene-acrylate copolymer or a bitumen emulsion;
with the particulate material.

## Patentansprüche

1. Kaltgeformtes Brikett, umfassend:
(i) ein Partikelmaterial;
(ii) eine Faser im Bereich von 0,1-0,4 Gew.-%; und
(iii) ein Bindemittel im Bereich von 0,2-0,8 Gew.-%, wobei das Bindemittel ausgewählt ist aus zumindest teilweise verseiftem Polyvinylalkohol, einer Kombination aus Polyvinylalkohol und Natriumhydroxid, einem Alkalimetall-Alkylsiliconat oder Polyalkyl-Kieselsäure, Phenol-Formaldehyd-Harz, Guargummi, einer Kombination aus Guargummi und Calciumoxid, anionischem Polyacrylamid, Styrol-Acrylat-Emulsion und Kombinationen daraus.

2. Brikett nach Anspruch 1, wobei die Faser eine cellulosehaltige Faser ist; wobei die Faser gegebenenfalls eine Textil- oder von Papier stammende Faser ist.

3. Brikett nach Anspruch 1 oder Anspruch 2, wobei die Schüttdichte der Faser im Bereich von 20-500 g/l liegt und/oder mindestens 90 % der Faser eine Länge von 1 mm bis 5 mm aufweisen.

4. Brikett nach einem der vorhergehenden Ansprüche, wobei die Faser eine Länge im Bereich von 0,2 mm-5 mm aufweist.

5. Brikett nach Anspruch 4, wobei die Faser einen Durchmesser im Bereich von 10-100 µm aufweist.

6. Brikett nach einem der vorhergehenden Ansprüche, wobei das Partikelmaterial ausgewählt ist aus einem Metallerz, metallerzhaltigem Abfall, Eisenrest, Eisenspänen, mineralischem Abfall, einem kohlenstoffhaltigen Material, Lichtbogenofenabfall, MDF-Sägemehl oder Kombinationen daraus.

7. Brikett nach Anspruch 6, wobei das Metallerz Eisenerz umfasst oder wobei das kohlenstoffhaltige Material Koks und/oder Kohle umfasst.

8. Brikett nach einem der vorhergehenden Ansprüche, wobei das Partikelmaterial einen Partikeldurchmesser von 4 mm oder weniger aufweist.

9. Brikett nach einem der vorhergehenden Ansprüche, wobei mindestens 10 Gew.-% des Partikelmaterials in der Lage sind, durch ein 100-µm-Sieb zu gelangen, bevor es zu einem Brikett gebildet wird.

10. Brikett nach einem der vorhergehenden Ansprüche, zusätzlich umfassend ein Vernetzungsmittel im Bereich von 0,01 bis 5 Gew.-%, ausgewählt aus Glutaraldehyd, Natriumhydroxid, Glyoxal, Glyoxal-Harz, PAAE-Harz, Melaminformaldehyden, organischen Titanaten, Borsäure, Ammonium, Zirconiumcarbonat und Glutardialdehyd-bis-natriumbisulphat; wobei das Vernetzungsmittel gegebenenfalls Glutaraldehyd umfasst.

11. Brikett nach einem der vorhergehenden Ansprüche, zusätzlich umfassend ein Imprägniermittel, das ein Styrol-Acrylat-Copolymer oder eine Bitumen-Emulsion umfasst, gegebenenfalls kombiniert mit dem Partikelmaterial oder als eine Schicht auf der Außenfläche des Briketts.

12. Brikett nach einem der vorhergehenden Ansprüche, ferner umfassend ein Kohlenstoffadditiv, das ausgewählt ist aus Anthrazit, Schwelkoks, Koks oder Kombinationen daraus.

13. Brikett nach einem der vorhergehenden Ansprüche, aufweisend einen Feuchtigkeitsgehalt von <15 Gew.-%.

14. Brikett nach einem der vorhergehenden Ansprüche, ferner umfassend ein Härtungsmittel, das ausgewählt ist aus Phenolformaldehyd, Glykoltriacetat und einem Gummi, wie etwa Guargummi, Akaziengummi und Gummi arabicum.

15. Brikett nach einem der vorhergehenden Ansprüche, wobei das Brikett ohne Sintern oder Erhitzen auf über 60 °C gebildet wird.

16. Verfahren zum Herstellen eines kaltgeformten Briketts nach einem der vorhergehenden Ansprüche, umfassend:
(i) Mischen des Partikelmaterials mit einer Faser im Bereich von 0,1-0,4 Gew.-% und einem Bindemittel im Bereich von 0,2-0,8 Gew.-%, wobei das Bindemittel ausgewählt ist aus zumindest teilweise verseiftem Polyvinylalkohol, einer Kombination aus Polyvinylalkohol und Natriumhydroxid, einem Alkalimetall-Alkylsiliconat oder Polyalkyl-Kieselsäure, Phenol-Formaldehyd-Harz, Guargummi, einer Kombination aus Guargummi und Calciumoxid, anionischem Polyacrylamid, Styrol-Acrylat-Emulsion und Kombinationen daraus;
(ii) Verdichten des Gemisches, um ein Brikett zu bilden; und
(iii) Aushärtenlassen des Briketts.

17. Verfahren nach Anspruch 16, wobei das Brikett ohne Sintern oder Erhitzen auf über 60 °C gebildet wird.

18. Verfahren nach Anspruch 16 oder Anspruch 17, ferner umfassend den Schritt des Mischens von einem von Folgendem:
einem Vernetzungsmaterial, das ausgewählt ist aus Glutaraldehyd, Natriumhydroxid, Glyoxal, Glyoxal-Harz, PAAE-Harz, Melaminformaldehyden, organischen Titanaten, Borsäure, Ammonium, Zirconiumcarbonat und Glutardialdehyd-bis-natriumbisulphat; und/oder
einem Imprägniermittel, das ein Styrol-Acrylat-Copolymer oder eine Bitumen-Emulsion umfasst;
mit dem Partikelmaterial.

## Revendications

1. Une briquette formée à froid comprenant :
(i) un matériau en particules ;
(ii) de la fibre dans la plage de 0,1 à 0,4 % en poids ; et
(iii) du liant dans la plage de 0,2 à 0,8 % en poids, dans lequel le liant est choisi parmi de l'alcool polyvinylique saponifié au moins partiellement, une combinaison d'alcool polyvinylique d'hydroxyde de sodium, un alkyl siliconate de métal alcalin ou un polyalkyl acide silicique, une résine phénol formaldéhyde, de la gomme de guar, une combinaison de gomme de guar et d'oxyde de calcium, du polyacrylamide anionique, une émulsion de styrène et d'acrylate et leurs combinaisons.

2. Une briquette suivant la revendication 1, dans laquelle la fibre est une fibre cellulosique ; dans laquelle éventuellement la fibre est une fibre dérivée du textile ou du papier.

3. Une briquette suivant la revendication 1 ou la revendication 2, dans laquelle la masse volumique apparente de la fibre est dans la plage de 20 à 500g/l et/ou au moins 90 % de la fibre a une longueur de 1 mm à 5 mm.

4. Une briquette suivant l'une quelconque des revendications précédentes, dans laquelle les fibres sont d'une longueur dans la plage de 0,2 mm à 5 mm.

5. Une briquette suivant la revendication 4, dans laquelle les fibres sont d'un diamètre dans la plage 10 à 100 µm.

6. Une briquette suivant l'une quelconque des revendications précédentes, dans laquelle le matériau en particules est choisi parmi un minerai métallique, des déchets contenant un minerai métallique, un résidu de fer, de la grenaille de fer, du déchet minéral, un matériau carboné, un résidu de four à arc, de la sciure de scie MDF ou leurs combinaisons.

7. Une briquette suivant la revendication 6, dans laquelle le minerai métallique comprend du minerai de fer ou dans lequel le matériau carboné comprend du coke et/ou du charbon.

8. Une briquette suivant l'une quelconque des revendications précédentes, dans laquelle le matériau en particules à un diamètre de particules de 4 mm ou moins.

9. Une briquette suivant l'une quelconque des revendications précédentes, dans laquelle au moins 10 % en poids du matériau en particules peut passer dans un tamis de 100 µm avant formation en une briquette.

10. Une briquette suivant l'une quelconque des revendications précédentes, comprenant en outre dans la plage de 0,01 à 5 % en poids d'un agent de réticulation choisi parmi le glutaraldéhyde, l'hydroxyde de sodium, le glyoxal, une résine de glyoxal, une résine de PAAE, des mélamines formaldéhydes, des titanates organiques, de l'acide borique, de l'ammonium, du carbonate de zirconium et du bisulfate de glutarique dialdéhyde-bis-sodique ; dans laquelle éventuellement l'agent de réticulation comprend du glutaraldéhyde.

11. Une briquette suivant l'une quelconque des revendications précédentes, comprend en outre un agent d'imperméabilité comprenant un copolymère de styrène et d'acrylate ou une émulsion bitumineuse combinée éventuellement au matériau en particules ou sous la forme d'une couche à la surface extérieure de la briquette.

12. Une briquette suivant l'une quelconque des revendications précédentes, comprenant en outre un additif carboné choisi parmi l'anthracite, le semi-coke, le coke ou leurs combinaisons.

13. Une briquette suivant l'une quelconque des revendications précédentes, ayant une teneur en humidité inférieure à 15 % en poids.

14. Une briquette suivant l'une quelconque des revendications précédentes, comprenant en outre un durcisseur choisi parmi le phénol formaldéhyde, le tri acétate de glycol et une gomme telle qu'une gomme de guar, une gomme d'acacia et une gomme arabique.

15. Une briquette suivant l'une quelconque des revendications précédentes, dans laquelle la briquette est formée sans frittage ou chauffage au-dessus de 60°C.

16. Un procédé de production d'une briquette formée à froid, suivant l'une quelconque des revendications précédentes, comprenant :
(i) mélanger le matériau en particules à de la fibre dans la plage de 0,1 à 0,4 % en poids et du liant dans la plage de 0,2 à 0,8 % en poids, choisi parmi de l'alcool polyvinylique à partir saponifié au moins partiellement, une combinaison d'alcool polyvinylique d'hydroxyde de sodium, un alkyl siliconate de métal alcalin ou un polyalkyl acide silicique, une résine phénol formaldéhyde, de la gomme de guar, une combinaison de gomme de guar et d'oxyde de calcium, du polyacrylamide anionique, une émulsion de styrène et d'acrylate et leurs combinaisons ;
(ii) comprimer le mélange pour former une briquette ; et
(iii) durcir la briquette.

17. Un procédé suivant la revendication 16, dans lequel la briquette est formée sans frittage ou chauffage au-dessus de 60°C.

18. Un procédé suivant la revendication 16 ou la revendication 17, comprenant en outre le stade de mélanger un ou plusieurs de :
une matière de réticulation choisie parmi le glutaraldéhyde, l'hydroxyde de sodium, le glyoxal, une résine de glyoxal, une résine de PAAE, des mélamines formaldéhydes, des titanates organiques, de l'acide borique, de l'ammonium, du carbonate de zirconium et du bisulfate de glutarique dialdéhyde-bis-sodique ; et/ou
un agent d'imperméabilisation comprenant un copolymère de styrène et d'acrylate ou une émulsion bitumineuse ;
au matériau en particules.
